# EUROPEAN PATENT APPLICATION

(11) **EP 3 287 862 A1**
(43) Date of publication of application: **28.02.2018**
(21) Application number: 16185717.2
(22) Date of filing: 25.08.2016
(51) Int. Cl.: G05D 1/02

(54) **METHOD FOR STEERING AN UNDERACTUATED SHIP**

(71) Applicant: Imotec Holding B.V., 7521 PH Enschede (NL)
(72) Inventor: Noshahri, Hengameh, 7522 DD Enschede (NL)
(74) Representative: 't Jong, Bastiaan Jacob

(57) **Abstract**

The invention relates to a method for steering an underactuated ship by controlling the propeller and rudder of the ship, which method comprises the steps of:
- determining a path between a starting position and an end position;
- measuring the position and heading of the ship in a space fixed frame of reference;
- transforming the determined path and the measured position of the ship to the body fixed frame of reference;
- feeding the difference between the determined path and the measured position and measured heading to proportional-derivative (PD) controllers, which control the propeller and rudder of the ship; and
- repeating the steps of measuring, transforming and feeding until the end position of the path is reached.

## Description

The invention relates to a method for steering an underactuated ship by controlling the propeller and rudder of the ship.

A system is called fully actuated if it has one or more control inputs for each Degree of Freedom (DOF). A fully actuated ship with three-dimensional configuration space comprised of forward, sideways, and heading would require actuators capable of exerting forces and moments independently to steer the vessel to any point with any desired heading.

In most cases, ships are equipped with single or twin propellers and rudders, which provide longitudinal force and moment, respectively. In such a case, there is no direct control action available in lateral direction and the moment for changing the heading can not be generated without having speed in longitudinal direction. Most ships are typically underactuated mechanisms.

Commanding the rudder, propulsion system, and any other device on board of the ship to reach a specified position, is known as ship steering control. Automatic steering systems have been developed over the course of time to satisfy various purposes. A comprehensive overview of marine vessel's control systems is provided in Z. Vukic and B. Borovic, "Guidance and control systems for marine vehicles," in The Ocean engineering handbook, 2000. The concept of automatic ship control dates back to the 19th century and it was first realized by fully mechanical autopilot designs. Later, by development of control theory and electronics, closed-loop control systems such as PID-controllers were introduced to correct the rudder angle. Problems associated with tuning of these controllers have led to using methods like pole placement, Linear Quadratic (LQ), Fuzzy, and Genetic Algorithms (F. J. Velasco, E. Lopez, T. M. Rueda, and E. Moyano, "Ship steering control," in Automation for the Maritime Industries, 2004).

Control of a fully actuated ship would be relatively simple, as the ship could be translated in any direction on the water and could be rotated in any direction to obtain the desired position and heading. However, as ships are typically underactuated, the control is typically more complex.

In a model-based ship-control approach, it is customary to consider a simplified version of ship dynamics. Single-Input-Single-Output (SISO) transfer function models, such as the Nomoto model (K. Nomoto, T. Taguchi, K. Honda, and S. Hirano, "On the steering qualities of Ships," in International Shipbuilding Progress, 1957, vol. 4.), facilitate the use of linear control methods. These techniques can only command one variable, which is usually the rudder angle, to control the ship heading. Increased functionality of ship maneuvering however, requires more sophisticated control.

Non-linear Multi-Input-Multi-Output (MIMO) control methods provide high performance features, but they need full measurements or observer systems to operate. State feedback linearization, sliding mode, backstepping, and Lyapunovs direct control are among these methods. A survey on non-linear ship control can be found in (T. I. Fossen, "A survey on nonlinear ship control: from theory to practice," in Proceeding of the 5th IFAC Conference on Manuevering and Control of Marine Craft, 2000.). These methods can generally be characterized as complex; the underlying mathematics require a significant amount of skills and expertise.

It is an object of the invention to provide a method for steering an underactuated ship by controlling the propeller and rudder of the ship, wherein the above mentioned disadvantages are reduced or even removed.

This object is achieved with the method according to the invention which method comprises the steps of:
- determining a path between a starting position and an end position;
- measuring the position and heading of the ship in a space fixed frame of reference;
- transforming the determined path and the measured position of the ship to the body fixed frame of reference;
- feeding the difference between the determined path and the measured position and measured heading to proportional-derivative (PD) controllers, which control the propeller and rudder of the ship; and
- repeating the steps of measuring, transforming and feeding until the end position of the path is reached.

With the method according to the invention the actual position and the desired position are transformed to the body fixed frame of reference. This allows for a simple control in which the deviation is reduced to zero and allows for the use of proportional-derivative (PD) controllers.

If the space fixed frame would be used, the control problem would be different depending on the position of the ship in the space, which would require different PD controllers, or at least differently tuned PD controllers, depending on the position of the ship.

Now with the invention, the body fixed frame of reference is used, in which the deviation always has to be controlled back to zero, independent of the position of the ship within the space fixed frame of reference. This allows for the use of PD controllers, which are tuned only to the specific control problem of reducing the deviation between the measured position and heading and the desired position and heading back to zero.

In a preferred embodiment of the method according to the invention the step of determining a path between a starting position and an end position comprises the steps of:
- calculating waypoints between the starting position and the end position, wherein each subsequent waypoint lies within the area direct accessible by the ship from the previous waypoint;
- smoothing the path between the waypoints, for example by calculating the Dubins-path, wherein the constraint on the curvature corresponds to the minimum turning radius of the ship.

With an underactuated ship not all desired end positions can be reached by a simple straight path. For example a position behind the ship requires an underactuated ship to make a semi-circular path, before the ship can sail along a straight path to the desired end position.

By calculating waypoints, wherein each subsequent waypoint lies within the area direct accessible by the ship from the previous waypoint, a path is generated which can be sailed by the underactuated ship.

It is thus understood that the direct accessible area of the ship is the area, typically in front of the ship, which the ship can reach by sailing along a straight path. Thus simply by controlling the rudder and the propeller.

In order to avoid strong steering movements at reaching a waypoint and then directing the ship to the next waypoint, the path is smoothed. Preferably a Dubins-path is calculated along the waypoints, as a Dubins-path is the shortest path which takes into account the minimum turning radius of the ship.

In a further preferred embodiment of the method according to the invention the step of determining a path further comprises the step of calculating a motion profile by first manually or automatically entering a desired speed for at least the last waypoint, and preferably for at least some of the intermediate waypoints, and secondly optimizing the timing of acceleration, deceleration and constant speed to obtain the desired speeds at the respective waypoints.

A ship has typically limitations in obtaining a certain speed, acceleration, deceleration, but also a limitation for the speed at which the ship can make a turn, without endangering the ship to capsize. By calculating a motion profile it is possible for the method to take into account these limitations.

It is additionally preferred that the method steers the ship in an over-damped manner, as overshoots in the control of the ship are generally unacceptable.

Yet a further preferred embodiment of the method according to the invention further comprises the steps of:
- obtaining ship parameters;
- obtaining weather data;
- feed forward control the propeller by the calculated motion profile, the ship parameters and the weather data.

By including a feed forward control of the propeller, which takes into account weather data and the ship parameters, the ship will respond quicker to acceleration and deceleration, compared to when the PD controllers are to compensate for the weather data and ship parameters.

The ship parameters preferably comprise the mass, the virtual mass, the front area and the drag coefficient of the ship.

The weather data preferably comprises water current strength, water current direction, wind strength and wind direction.

For example, when a strong counter current is present, the feed forward control already anticipates by increasing the power on the propeller more, then when the PD controllers would first detect a deviation and gradually increase the power on the propeller to slowly and carefully reduce the deviation.

The invention also relates to an underactuated ship with at least a propeller and a rudder, the ship comprising:
- input means for inputting at least a desired end position;
- a position sensor, such as a GPS sensor, for measuring the position and heading of the ship in a space fixed frame of reference;
- a controller connected to the input means and the position sensor for controlling the rudder and the propeller, wherein the controller implements the method according to the invention.

A preferred embodiment of the underactuated ship according to the invention, further comprises:
- a first actuator for actuating the propeller,
   wherein the controller is connected to the first actuator;
- a second actuator for actuating the rudder,
   wherein the controller is connected to the second actuator.

The first actuator could be an actuator actuating the throttle lever, but could also be an electronic signal to the engine control if the ship is already provided therewith.

The same applies for the second actuator. If the rudder has a mechanical coupling between steering wheel and rudder, than a actuator, like a hydraulic cylinder could be provided. However, if the ship already uses a fly-by-wire kind of control of the rudder, then the second actuator can be embodied by an electronic signal.

These and other features of the invention will be elucidated in conjunction with the accompanying drawings.
Figure 1 shows a diagram of an embodiment of the method according to the invention.
Figure 2 shows a diagram of the direct accessible area of a ship.
Figure 3 shows a diagram of waypoint generation and smoothing of the path.
Figure 4 shows schematically the path of the ship controlled by the method according to the invention.

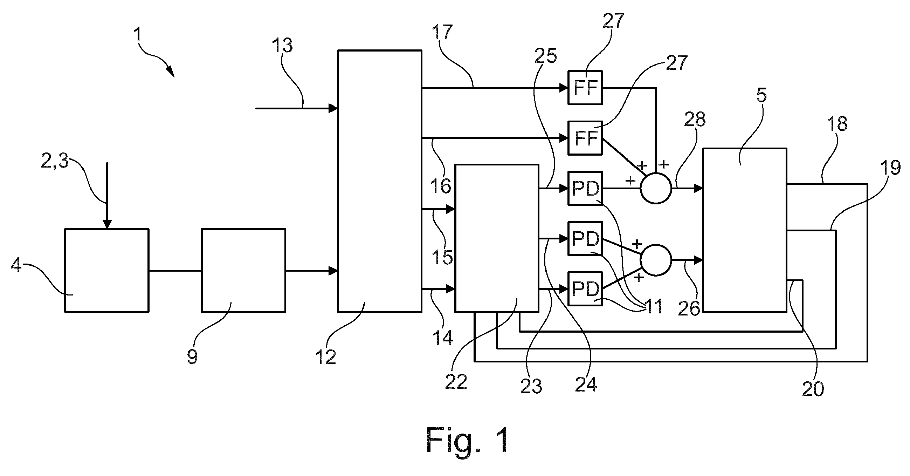

Figure 1 shows a diagram 1 of an embodiment of the method according to the invention. First the starting position 2 and the desired end position 3 are entered for waypoint generation at 4.

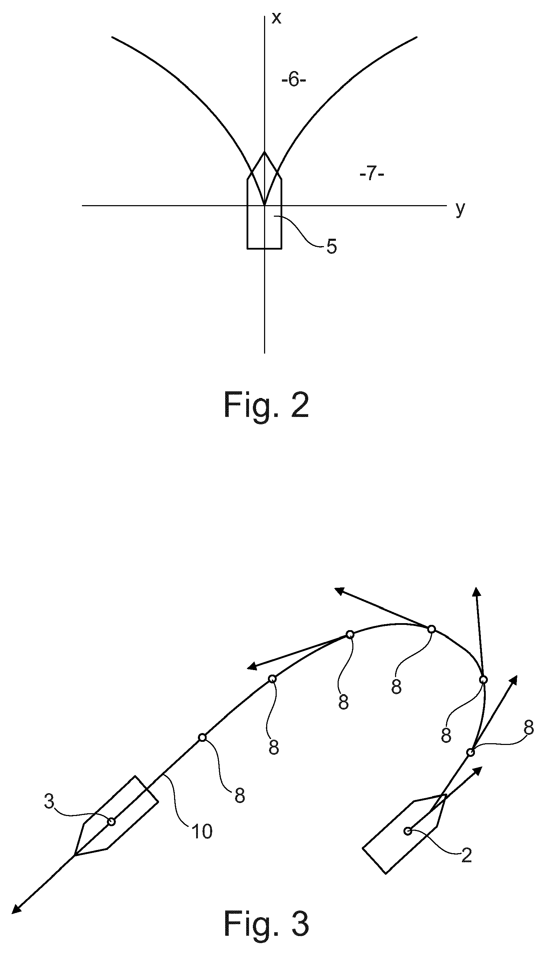

Figure 2 shows a ship 5 within a coordinate system with a x-axis and a y-axis. As the ship 5 only has a propeller and a rudder, a first region 6 and a second region 7 can be defined in this coordinate system. The first region 6 is the area directly accessible by the ship simply by controlling the rudder and the propeller. The second region 7 illustrates the area of positions, for which the ship 5 needs to maneuver in order to arrive at said position.

Based on the directly accessible area 6 of the ship, waypoints 8 are calculated between the starting position 2 and the end position 3, such that the ship can directly move from the first waypoint 8 to the next waypoint 8 by only controlling the rudder and the propeller. (see figure 3)

After the waypoints 8 are defined, the part 9 of the diagram 1 calculates a smooth path 10 along the waypoints 8, for example by calculating a Dubins path, in which the minimum turning radius of the ship is taken into account.

With the path calculated by the part 9 a control of the ship using PD controllers 11 could already be performed. However in order to further improve the control in this embodiment, the path 10 is supplemented by a motion profile in part 12 in the diagram 1. The part 12 takes manual input 13 as well as weather data and ship parameters, such as the mass, the virtual mass, the front area and the drag coefficient of the ship into account.

The part 12 then outputs the desired heading 14, the desired position 15, the desired velocity 16 and the desired acceleration 17. The desired heading 14 and the desired position 15, together with the actual x-position 18 and the actual y-position 19 are transformed by part 22 to the body fixed frame of reference, while the heading 20 is maintained in the space fixed frame and then the values are subtracted from each other to provide a delta heading 23, a delta y-position 24 and a delta x-position 25.

The delta heading 23 and the delta y-position 24 are each fed to a PD controller 11 and then combined to a signal 26 to control the rudder.

The delta x-position 25 is combined with the signals of the feed forward controllers to which the desired velocity 16 and the desired acceleration 17 are fed. The resulting signal 28 is used to control the propeller of the ship 5.

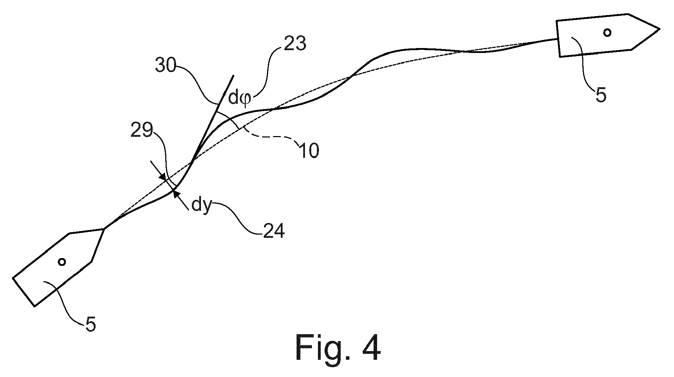

Figure 4 shows schematically the path of the ship controlled by the diagram 1 shown in figure 1. The ship 5 has a calculated path 10, while the actual position 29 and heading 30 deviates from the desired calculated path 10 and thus results in the delta heading 23 and the delta y-position 24.

As schematically and exaggerated shown in figure 4, the ship 5 will follow more or less the calculated path 10 with the method according to the invention. This is achieved by simple PD controllers 11, because the true position and the desired position are transformed to the body fixed frame of reference.

## Claims

1. Method for steering an underactuated ship by controlling the propeller and rudder of the ship, which method comprises the steps of:
- determining a path between a starting position and an end position;
- measuring the position and heading of the ship in a space fixed frame of reference;
- transforming the determined path and the measured position of the ship to the body fixed frame of reference;
- feeding the difference between the determined path and the measured position and measured heading to proportional-derivative (PD) controllers, which control the propeller and rudder of the ship; and
- repeating the steps of measuring, transforming and feeding until the end position of the path is reached.

2. Method according to claim 1, wherein the step of determining a path between a starting position and an end position comprises the steps of:
- calculating waypoints between the starting position and the end position, wherein each subsequent waypoint lies within the area direct accessible by the ship from the previous waypoint;
- smoothing the path between the waypoints, for example by calculating the Dubins-path, wherein the constraint on the curvature corresponds to the minimum turning radius of the ship.

3. Method according to claim 2, wherein the step of determining a path further comprises the step of calculating a motion profile by first manually or automatically entering a desired speed for at least the last waypoint, and preferably for at least some of the intermediate waypoints, and secondly optimizing the timing of acceleration, deceleration and constant speed to obtain the desired speeds at the respective waypoints.

4. Method according to claim 3, further comprising the steps of:
- obtaining ship parameters;
- obtaining weather data;
- feed forward control the propeller by the calculated motion profile, the ship parameters and the weather data.

5. Method according to claim 4, wherein the ship parameters comprise the mass, the virtual mass, the front area and the drag coefficient of the ship.

6. Method according to claim 4 and 5, wherein the weather data comprises water current strength, water current direction, wind strength and wind direction.

7. Underactuated ship with at least a propeller and a rudder, the ship comprising:
- input means for inputting at least a desired end position;
- a position sensor, such as a GPS sensor, for measuring the position and heading of the ship in a space fixed frame of reference;
- a controller connected to the input means and the position sensor for controlling the rudder and the propeller, wherein the controller implements the method according to any of the preceding claims.

8. Underactuated ship according to claim 7, further comprising:
- a first actuator for actuating the propeller,
wherein the controller is connected to the first actuator;
- a second actuator for actuating the rudder,
wherein the controller is connected to the second actuator.
